# FASCICULE DE BREVET EUROPEEN

(11) **EP 0 833 418 B1**
(45) Date de publication et mention de la délivrance du brevet: **20.12.2000**
(21) Numéro de dépôt: 97402248.5
(22) Date de dépôt: 26.09.1997
(51) Int. Cl.: H01S 3/06

(54) **Microlaser solide à déclenchement électrooptique à électrodes independantes, et procédé de réalisation**
Elektrooptisch gütegeschalteter Mikrolaser mit unabhängigen Elektroden und Herstellungsverfahren
Electrooptically switched microlaser with independent electrodes and manufacturing method

(30) Priorité: 30.09.1996 FR 9611867
(43) Date de publication de la demande: 01.04.1998
(73) Titulaire: COMMISSARIAT A L'ENERGIE ATOMIQUE, 75015 Paris (FR)
(72) Inventeur: Thony, Philippe, 38500 La Buisse (FR); Molva, Engin, 38000 Grenoble (FR); Bergeon, Murièle, 26700 Pierrelatte (FR); Accomo, Roger, 38420 Le Versoud (FR)
(74) Mandataire: Dubois-Chabert, Guy

(56) Documents cités:
- EP-A- 0 724 316
- ZAYHOWSKI J J ET AL: "DIODE-PUMPED COMPOSITE-CAVITY ELECTROOPTICALLY TUNED MICROCHIP LASER" IEEE PHOTONICS TECHNOLOGY LETTERS, vol. 5, no. 10, 1 octobre 1993, pages 1153-1155, XP000414203
- ZAYHOWSKI J J ET AL: "FREQUENCY-MODULATED ND:YAG MICROCHIP LASERS" OPTICS LETTERS, vol. 14, no. 12, 15 juin 1989, pages 618-620, XP000035251

## Description

### Domaine technique

L'invention se rapporte au domaine des microlasers solides déclenchés activement.

Un avantage du microlaser réside dans sa structure en un empilement de multicouches. Le milieu actif laser est constitué par un matériau de faible épaisseur (entre 150-1000 µm) et de petites dimensions (quelques mm²), sur lequel des miroirs diélectriques de cavité sont directement déposés. Ce milieu actif peut être pompé par une diode laser III-V qui est soit directement hybridée sur le microlaser, soit couplée à ce dernier par fibre optique.

Les microlasers ont de nombreuses applications, dans des domaines aussi variés que l'industrie automobile, l'environnement, l'instrumentation scientifique, la télémétrie.

### Etat de l'art antérieur

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant 10⁻⁸ à 10⁻⁹ secondes, avec une puissance moyenne de quelques dizaines de mW.

Dans les lasers solides, on peut obtenir de telles puissances crêtes élevées en les faisant fonctionner en mode pulsé à des fréquences variant entre 10 et 10⁴ Hz. Pour cela, on utilise des procédés de déclenchement de la cavité.

Une cavité peut être déclenchée de manière active ou passive.

Dans le cas du déclenchement passif des pertes variables sont introduites dans la cavité sous forme d'un matériau absorbant saturable.

Dans le cas d'un déclenchement actif, la valeur des pertes est pilotée de façon externe par l'utilisateur, par exemple par un miroir de cavité tournant, par des moyens acousto-optiques ou électro-optiques intracavité changeant soit le trajet du faisceau, soit son état de polarisation. La durée de stockage, l'instant d'ouverture de la cavité ainsi que le taux de répétition peuvent être choisis indépendamment.

L'article de Zayhowski et al. Intitulé "Diode-pumped microchip lasers electro-optically Q-switched at high pulse repetition rates", paru dans Optics Letters, vol. 17, p. 1201-1203 (1992) décrit un microlaser déclenché activement.

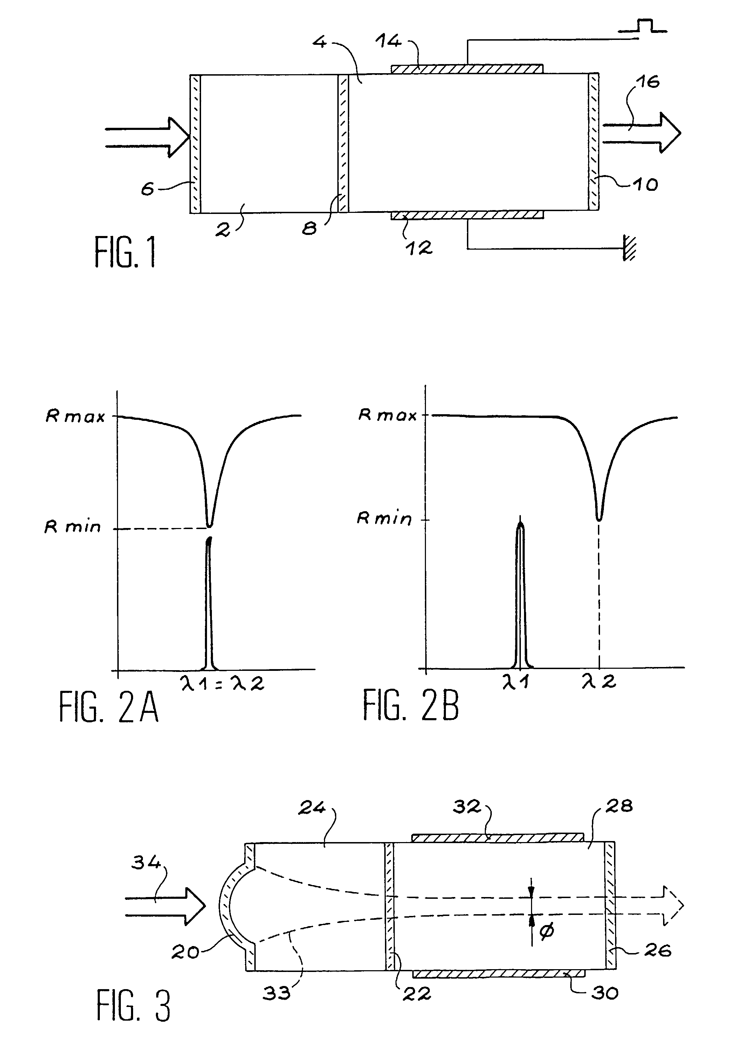

Dans ce document, le déclenchement est réalisé dans une configuration de deux cavités Fabry-Perot couplées avec des faces planes. Un tel ensemble est illustré sur la figure 1, où la référence 2 désigne le milieu actif du microlaser et la référence 4 un matériau électro-optique (LiTaO₃). Le milieu actif 2 du laser forme, avec un miroir d'entrée 6 et un miroir intermédiaire 8 une première cavité Fabry-Pérot. Le matériau déclencheur forme, avec le miroir intermédiaire 8 et le miroir de sortie 10, une deuxième cavité Fabry-Pérot. Le matériau électrooptique 4 peut être par exemple collé à la surface du miroir intermédiaire 8. Les deux cavités sont couplées. Le déclenchement se fait en modifiant la longueur optique du matériau électrooptique 4 par une action externe. Si l'on appelle L₁, n₁, λ₁ (respectivement : L₂, n₂, λ₂) les longueurs, indices optiques et longueurs d'onde optique de résonance de la première cavité (respectivement : de la deuxième cavité), il existe la relation : m₁λ₁=2n₁L₁ et m₂λ₂=2n₂L₂ avec m₁ et m₂ nombres entiers.

Des électrodes de déclenchement 12, 14 sont placées perpendiculairement à l'axe du faisceau laser 16 de part et d'autre du matériau déclencheur 4. Si une tension V est appliquée entre ces électrodes, un champ électrique E=V/e, où e est la distance entre les électrodes (ce qui correspond à l'épaisseur du matériau électro-optique) en résulte, et l'indice optique n₂ du matériau électro-optique en est modifié. Ceci affecte le couplage des deux cavités et modifie la réflectivité du miroir intermédiaire 8 vu par le milieu laser. En effet, si les longueurs d'onde de résonance des deux cavités coïncident (λ₁=λ₂ ou n₁L₁/n₂L₂=m₁/m₂) la réflectivité de la deuxième cavité (électro-optique) vue par la première cavité (matériau laser) sera minimum et il n'y aura pas d'action laser. Ainsi, en agissant sur le champ E, on peut modifier les conditions de résonance du microlaser, donc la réflectivité de la deuxième cavité et ainsi on peut réaliser le déclenchement actif.

Les deux états correspondant à une réflectivité minimum ou à une réflectivité maximum de la deuxième cavité sont illustrés sur les figures 2A et 2B. Sur ces figures, la courbe dans la partie supérieure donne la réflectivité de la deuxième cavité en fonction de la longueur d'onde, la raie laser étant représentée dans la partie inférieure. La figure 2A correspond au cas où la réflectivité de la deuxième cavité est à sa valeur minimum Rₘᵢₙ, à la longueur d'onde de résonance de la première cavité λ₁. La figure 2B correspond au cas où les longueurs d'onde de résonance des deux cavités ne sont plus identiques (λ₁≠λ₂) et où la deuxième cavité présente une réflectivité maximum Rₘₐₓ à la longueur d'onde λ₁.

Pour un microlaser YAG:Nd émettant vers 1,06 µm, avec un déclencheur électro-optique constitué par du LiTaO₃ d'épaisseur environ égale à 1 mm, on a typiquement : n₁=1,8, n₂=2, L₁=500 µm, L₂=900µm. La variation maximum de réflectivité de la deuxième cavité est alors obtenue pour dλ/λ=dL₂/L₂=dn₂/n₂=10⁻⁴ environ.

Le type de microlaser décrit dans l'article de Zayhowski cité ci-dessus est fabriqué par un procédé manuel : il met en oeuvre des étapes de collage de morceaux prédécoupés. Un tel montage est incompatible avec la vocation des microlasers à une production de masse.

Un autre type de microlasers, déclenchés activement, a été décrit dans la demande de brevet EP-724 316. Un dispositif, décrit dans ce document, est représenté schématiquement sur la figure 3. Sur cette figure, la référence 24 désigne le milieu actif laser, tel que par exemple un milieu YAG dopé au néodyme (Nd). Ce milieu est compris entre un miroir d'entrée 20 et un miroir intermédiaire 22 avec lesquels il constitue une première cavité résonnante. Une seconde cavité résonnante est constituée par le miroir intermédiaire 22, un miroir de sortie 26 et un matériau 28, qui est par exemple un matériau électro-optique, tel que du LiTaO₃. Une différence de potentiel est appliquée à ce matériau à l'aide de deux électrodes de contact 30, 32. Un faisceau de pompage 34 est dirigé sur un micro-miroir d'entrée 20, concave, réalisé sur la face d'entrée du matériau laser 24. Ce miroir permet d'obtenir un diamètre Φ du faisceau laser 33, à l'intérieur du milieu électro-optique 28, qui est petit, typiquement de l'ordre de quelques dizaines de micromètres. Ceci permet de ramener l'épaisseur du milieu électro-optique à une valeur comprise entre 100 et 500µm. Une telle structure peut être réalisée par un procédé de fabrication collectif, compatible avec une production de masse. Un tel procédé, décrit dans le document EP-724 316, comporte une douzaines d'étapes qui permettent d'obtenir une puce microlaser avec :
- deux matériaux différents, l'un étant un matériau laser, l'autre un matériau électro-optique,
- trois empilements de couches minces diélectriques (un sur chaque face et un entre les deux matériaux) : un miroir d'entrée 20 sur le matériau laser, un miroir intermédiaire 22, un miroir de sortie 26 sur le matériau électro-optique,
- des électrodes, déposées sur les faces latérales du matériaux électro-optique, la tension appliquée permettant de faire varier l'indice du matériau électro-optique.

De manière résumée, ce procédé comporte au moins les étapes suivantes :
1) découpage des matériaux laser et électro-optiques en tranches,
2) polissage des deux faces des tranches, pour obtenir des faces planes et parallèles,
3) gravure éventuelle de microsurfaces sphériques sur les faces polies,
4) dépôt des miroirs diélectriques d'entrée, intermédiaire, et de sortie sur les tranches,
5) collage d'une lame de matériau laser et d'une lame de matériau électro-optique,
6) protection de la face de sortie (sur le matériau électro-optique), par exemple à l'aide d'une résine,
7) rainurage du matériau électro-optique,
8) dépôt d'électrodes (par exemple : Cr-Au) sur la face rainurée, et notamment sur les parois des rainures,
9) décapage chimique de la résine de protection, ce qui enlève la couche d'or sur le sommet des rainures,
10) découpe des puces microlasers, en suivant notamment le fond des rainures,
11) montage sur un support avec amenée de la tension de commande,
12) prise de contact entre les pistes d'amenée de la tension et les électrodes déposées,
13) connexion de la diode de pompage au microlaser.

Ces étapes technologiques, si elles permettent de définir un procédé compatible avec une fabrication de masse, sont néanmoins nombreuses. Les procédés de réalisation de microlasers continus, ou à déclenchement passif, tels que celui décrit dans le document EP-653 824 (US-5 495 494) ne mettent pas en oeuvre autant d'étapes. Par conséquent, le coût de fabrication d'un microlaser à déclenchement actif reste élevé, comparé à celui d'un microlaser continu ou d'un microlaser à déclenchement passif : le procédé de fabrication est plus long, et il nécessite des investissements supplémentaires, en machines et en compétences. Ceci pose aussi des problèmes de fiabilité, car certaines étapes de procédé sont délicates (par exemple, l'étape de décapage de la résine de protection sur le miroir, ou le dépôt Cr-Au sur la résine sans modifier les propriétés de celle-ci). En outre, on réalise deux étapes de découpe : l'étape de rainurage puis l'étape de découpe des puces.

De plus, les dispositifs actuels nécessitent de réaliser un contact électrique entre les électrodes déposées, et le circuit de commande qui module la tension appliquée. Des techniques sont disponibles pour réaliser ce contact, mais cela complique la fabrication du dispositif. Les contacts peuvent par exemple être réalisés par collage à la laque d'argent, collage à la colle conductrice chargée en argent, ou par "wire bonding" (c'est-à-dire soudure de fils d'or de diamètre très fin, compris entre quelques dizaines et quelques centaines de micromètres). Enfin, les performances électriques ne sont pas toujours bonnes : la résistance du contact n'est pas forcément nulle, et il en résulte une consommation électrique et un échauffement supplémentaires, ce qui est problématique avec des hautes tensions de commande.

### Exposé de l'invention

L'invention concerne un nouveau type de microlasers à déclenchement actif, dont la structure puisse être réalisée par une fabrication collective plus simple que celle connue selon l'art antérieur. En outre, dans un tel dispositif, le contact électrique entre les électrodes de commande et le circuit de commande est réalisé de manière plus simple que dans l'art antérieur.

Plus précisément, l'invention a pour objet une cavité microlaser à déclenchement actif, et ses moyens de déclenchement, comportant :
- un milieu constitué d'un matériau actif laser, formant une première cavité résonnante entre un miroir d'entrée et un miroir intermédiaire,
- un élément de déclenchement, en un matériau électro-optique, formant une seconde cavité résonnante entre le miroir intermédiaire et un miroir de sortie, et ayant une première et une deuxième surfaces latérales,
- l'élément de déclenchement étant compris entre un premier et un second éléments de support, une première électrode de déclenchement étant réalisée sur le premier élément de support, et étant appliquée contre la première surface latérale de l'élément de déclenchement, une deuxième électrode de déclenchement étant réalisée sur le deuxième élément de support et étant appliquée contre la deuxième surface latérale de l'élément de déclenchement.

Dans un tel dispositif, les électrodes sont réalisées sur chacun des éléments de support, puis sont amenées en contact contre le matériau électro-optique. Ainsi, le procédé de réalisation, qui reste compatible avec une fabrication collective, est plus simple que le procédé connu de l'art antérieur : on réalise d'une part les deux cavités couplées, d'autre part les électrodes (par exemple déposées en couches minces) sur les éléments de support, et on amène les éléments de support et les électrodes en contact avec l'élément de déclenchement.

Par ailleurs, le problème de réalisation des contacts sur le microlaser ne se pose pas, puisque les électrodes appliquant la tension sur le matériau électro-optique ne sont plus disposées sur le microlaser, mais sur le support.

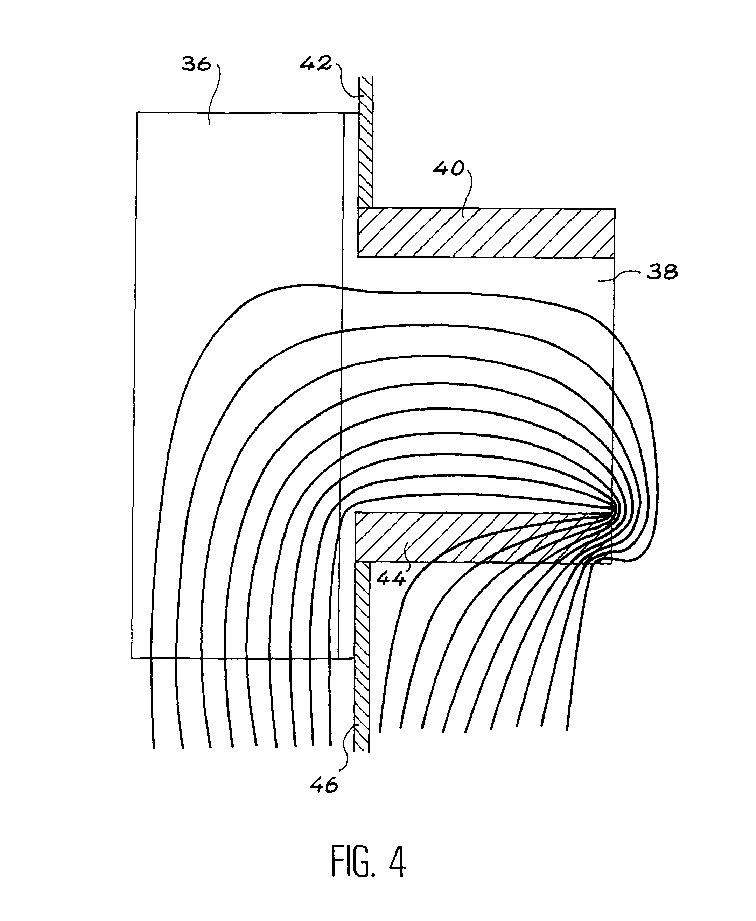

Selon un mode particulier de réalisation, on cherche à rendre le champ électrique le plus homogène possible dans le cristal ou le matériau électro-optique. Une telle condition d'homogénéité n'est pas forcément bien réalisée dans les dispositifs existants : les lignes de champ sont en effet en général courbées sur les bords des électrodes. Comme les électrodes sont déposées sur le cristal électro-optique, elles sont forcément limitées aux surfaces latérales de ce dernier. A l'intérieur du cristal, les lignes de champ sont donc courbées. De telles lignes sont représentées en trait interrompu sur la figure 3 et sont désignées par les références 35, 37. La figure 4 illustre par ailleurs une autre structure de l'art antérieur, décrite dans le document EP-724 316, comportant un milieu actif laser 36, un matériau électro-optique 38, ses électrodes de déclenchement 40, 44 et les contacts électriques 42, 46 pour ces électrodes. Les lignes de champ sont représentées en traits continus, et leur courbure apparaît bien sur cette figure. On voit donc qu'une telle structure ne favorise pas l'homogénéité du champ électrique dans le milieu électro-optique.

Afin de résoudre ce problème, le milieu actif laser a une épaisseur sensiblement égale à l'épaisseur de l'élément électro-optique, chacune des première et deuxième surfaces latérales de l'élément électro-optique étant prolongée par, respectivement, une première et une deuxième surfaces latérales du milieu actif laser, l'ensemble constitué par le milieu actif laser et l'élément électro-optique étant compris entre les premier et deuxième éléments de support, les première et deuxième électrodes de commande s'étendant, respectivement, sur au moins toutes les premières (respectivement : deuxièmes) surfaces latérales de l'élément électro-optique et du milieu actif laser.

Dans ce mode de réalisation, les électrodes de commande, s'étendant tout le long de l'élément électro-optique et au-delà, une bonne homogénéité des lignes de champ électrique est assurée à l'intérieur du matériau électro-optique.

Selon un autre mode de réalisation, le milieu actif laser est également compris entre les premier et deuxième éléments de support, les électrodes de déclenchement pouvant également être appliquées de part et d'autre du milieu actif laser. Ainsi, le milieu actif laser est pris en contrainte entre les deux éléments de support. Une telle contrainte induit dans le matériau laser une variation d'indice non homogène si elle est unidirectionnelle. Cette biréfringence induite permet de favoriser une polarisation du faisceau laser.

Dans tous les cas décrits ci-dessus, les premier et second éléments de support peuvent être des parois opposées d'un trou, pratiquées dans un substrat (par exemple : une plaque ce circuit imprimé) et apte à recevoir, au moins partiellement, l'élément électro-optique, les première et deuxième électrodes étant réalisées sur lesdites parois. De préférence, le trou présente une profondeur au moins égale à la longueur du matériau électro-optique.

L'invention a également pour objet une cavité microlaser à déclenchement actif et ses moyens de déclenchement, comportant :
- un milieu constitué d'un matériau actif laser, formant une première cavité résonnante entre un miroir d'entrée et un miroir intermédiaire,
- un élément de déclenchement, en un matériau électro-optique, formant une seconde cavité résonnante entre le miroir intermédiaire et un miroir de sortie, cet élément ayant une première et une deuxième surfaces latérales,
- l'élément de déclenchement étant compris entre une première et une seconde électrodes massives, respectivement appliquées contre au moins une partie des première et deuxième surfaces latérales.

Des électrodes massives étant appliquées, de part et d'autre du matériau électro-optique, la réalisation de l'ensemble du dispositif se trouve simplifiée par rapport aux dispositifs de l'art antérieur : on réalise, d'une part, les deux cavités couplées, d'autre part les électrodes massives, et on amène celles-ci en contact avec l'élément de déclenchement. En outre, les contacts entre les électrodes massives et un dispositif de commande de la tension sont aisés à réaliser.

Chaque électrode massive peut s'étendre sur au moins toute la surface latérale de l'élément électro-optique contre laquelle elle est appliquée.

L'homogénéité du champ électrique dans le matériau électro-optique est améliorée si le milieu actif laser présente une épaisseur sensiblement égale à l'épaisseur de l'élément électro-optique, chacune des première et deuxième surfaces latérales de l'élément électro-optique étant prolongée par, respectivement, une première et deuxième surfaces latérales du milieu actif laser, les première et deuxième électrodes massives étant, respectivement, appliquées sur toutes les premières (respectivement : deuxièmes) surfaces latérales.

Selon un autre aspect, l'ensemble constitué par le milieu actif laser et l'élément électro-optique est compris entre les électrodes massives. Ceci permet d'appliquer une contrainte au milieu actif laser, et donc de contrôler la polarisation du faisceau lumineux.

Enfin, afin de réaliser un ajustement du contact entre le milieu électro-optique et les électrodes, un joint conducteur peut être situé à l'interface entre le matériau électro-optique et les électrodes.

L'invention concerne également un procédé de réalisation d'une cavité microlaser à déclenchement actif et de ses moyens de déclenchement.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1 représente un microlaser déclenché par un matériau électro-optique, selon l'art antérieur,
- les figures 2A et 2B représentent, pour un microlaser à déclenchement actif, les positions relatives de la raie laser et d'un mode de la cavité constituée par le matériau déclencheur,
- les figures 3 et 4 représentent d'autres structures de microlaser à déclenchement actif, selon l'art antérieur,
- les figures 5A et 5B sont des exemples de réalisation d'un dispositif selon l'invention.
- Les figures 6A et 6B sont d'autres exemples de réalisation d'un dispositif selon l'invention,
- les figures 7A et 7B représentent respectivement un matériau auquel des contraintes sont appliquées et une courbe de gain,
- la figure 8 représente schématiquement des lignes de champ dans le cas d'électrodes s'étendant tout le long du microlaser,
- la figure 9 représente une application d'un dispositif selon l'invention
- la figure 10 représente un microlaser intégré à une plaque de céramique et couplé avec ses moyens de pompage.

### Description détaillée de modes de réalisation de l'invention

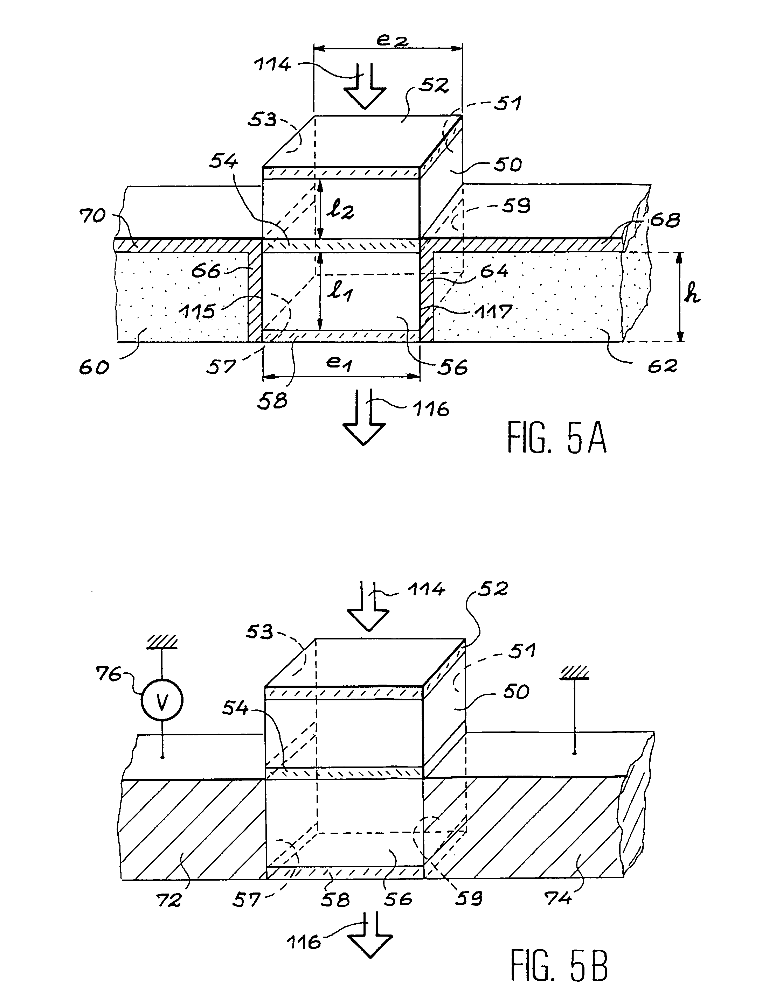

La figure 5A représente un premier mode de réalisation de l'invention. Elle comporte une cavité microlaser à déclenchement actif, le déclenchement étant assuré à l'aide d'un élément en un matériau électro-optique. En fait, le microlaser comporte deux cavités couplées, fonctionnant sur les mêmes principes que ceux décrits sur les figures 2A et 2B déjà commentées ci-dessus.

Le microlaser comporte donc un milieu actif laser 50 qui forme, avec un miroir d'entrée 52 et un miroir intermédiaire 54 une première cavité résonnante. Le milieu actif peut être par exemple un milieu YAG, dopé au néodyme (Nd). Ce peut être également un matériau choisi parmi l'un des matériaux suivants : LMA (LaMgAl₁₁O₁₉), YVO₄, YSO (Y₂SiO₅), YLF (YLiF₄) ou GdVO₄, etc. Le dopage au néodyme, pour une émission à 1,06 µm, a été mentionné ci-dessus. Le dopage peut être également un dopage à l'erbium ou un codopage erbium-ytterbium pour une émission autour de 1,5 µm ; ce peut être également un dopage Tm ou Ho ou un codopage Tm-Ho pour une émission autour de 2 µm.

Le matériau laser peut aussi être un verre phosphate (matériau pour une émission à 1,5 µm).

La longueur ℓ₂ du milieu actif laser est de l'ordre de quelques centaines de micromètres.

Une seconde cavité résonnante est constituée par le miroir intermédiaire 54, un miroir de sortie 58, et un élément 56 en un matériau électro-optique, tel que LiTaO₃. On désigne par ℓ₁ la longueur de ce second matériau 56.

Les longueurs ℓ₁ et ℓ₂ sont mesurées suivant l'axe de la cavité, c'est-à-dire suivant l'axe d'émission du faisceau laser. Le faisceau laser émis par le microlaser est schématisé, sur la figure 5A, par la flèche 116.

Le matériau électro-optique 56 est compris entre deux élément de support 60, 62 sur lesquels sont déposées, par exemple sous forme de couche mince, des électrodes 64, 66 de commande du champ électrique à l'intérieur du matériau électro-optique. Les éléments de support 60, 62, 80, 82 sont de préférence constitués d'un matériau isolant électrique et bon conducteur de la chaleur. Les électrodes sont réalisées, par exemple par métallisation, sur les éléments de support 60, 62, préalablement à l'assemblage de ces derniers avec le microlaser. Les électrodes sont donc appliquées contre les parois latérales 57, 59 de l'élément électro-optique.

La structure qui vient d'être décrite ci-dessus est donc parfaitement compatible avec un procédé de réalisation collectif et simplifié. En outre, les électrodes étant préalablement réalisées sur les éléments de support 60, 62, elles peuvent être aisément prolongées par des métallisations, ou pistes conductrices 68, 70, qui les relient à un circuit de commande. Ainsi, les problèmes posés par la réalisation des prises de contact sur des électrodes préalablement déposées sur la cavité microlaser elle-même, sont évités.

Sur la figure 5A, les éléments de support 60, 62, sensiblement parallélépipédiques, ont une hauteur h égale à ou sensiblement égale à la longueur ℓ₁ du matériau électro-optique 56. Ces éléments de support 60, 62 peuvent avoir une hauteur h plus importante. Dans ce cas, non seulement le matériau électro-optique 56, mais également une partie du milieu actif laser 50, sont compris entre les éléments de support 60, 62. De même, les électrodes 66, 64 s'étendent alors non seulement sur les surfaces latérales 57, 59 du matériau électro-optique 56, mais également sur les surfaces latérales 51, 53 du milieu actif laser 50. Plus les électrodes de commande du milieu électro-optique 56 ont une extension importante, plus l'homogénéité du champ électrique à l'intérieur de ce milieu est assurée.

Un autre mode de réalisation est représenté sur la figure 5B, où des références identiques à celles de la figure 5A y désignent des éléments identiques ou correspondants. En particulier, le microlaser comporte toujours la même structure de deux cavités couplées. Le milieu électro-optique 56 est compris entre deux électrodes massives 72, 74, appliquées contre ses parois latérales 57, 59. Les électrodes massives sont de forme sensiblement parallèlépipédique ; elles ont une hauteur h pouvant être égale ou sensiblement égale à ℓ₁ ou pouvant être supérieure à ℓ₁. L'une de ces électrodes 72 peut être reliée à des moyens 76 pour la porter à un certain potentiel V, tandis que l'autre électrode 74 est par exemple maintenue au potentiel de la terre. La connexion des électrodes 72, 74 aux moyens de commande 76 de la tension est particulièrement aisée à réaliser. Là encore, la réalisation de l'ensemble du dispositif est, elle aussi, particulièrement aisée, puisque l'ensemble des deux cavités laser-élément électro-optique est réalisé préalablement, et qu'ensuite les électrodes massives 72, 74 sont appliquées contre les parois latérales de l'élément électro-optique, Ces électrodes peuvent, comme dans le cas de la figure 5A, s'étendre au-delà de l'élément électro-optique (par exemple h>ℓ₁), et recouvrir au moins en partie les parois latérales 51, 53 du milieu actif laser 50, ce qui améliore l'homogénéité du champ dans le matériau électro-optique.

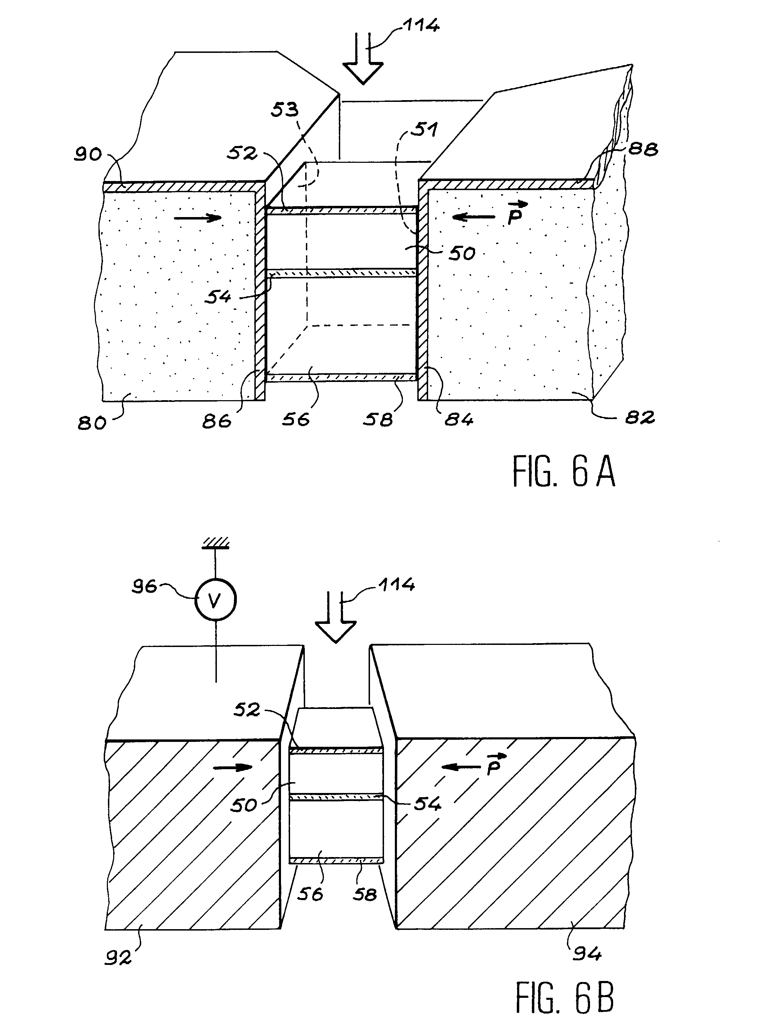

La figure 6A représente un mode de réalisation dans lequel les éléments support 80, 82 ont une section latérale plus importante que les surfaces des parois latérales du milieu actif laser et du matériau électro-optique 56 prises ensembles. Les références 84, 86 désignent les électrodes de contact qui s'étendent sur toutes les surfaces latérales 51, 53, 57, 59 du microlaser. Ces électrodes de commande sont reliées à des pistes, ou métallisation, de commande 88, 90 qui permettent de les relier à un circuit de commande de la tension, et avec les mêmes avantages que décrits ci-dessus en liaison avec la figure 5A.

De même, sur la figure 6B, des électrodes massives 92, 94 encadrent latéralement l'ensemble du microlaser.

Ces structures des figures 6A et 6B sont elles aussi compatibles avec un procédé de réalisation collective simplifié du microlaser. En outre, le problème du contact des électrodes avec les moyens d'alimentation en tension est également résolu, puisque ce contact est assuré très facilement sur les électrodes 92, 94 elles-mêmes, ou sur les pistes de connexion 88, 90 réalisées sur les supports 80, 82.

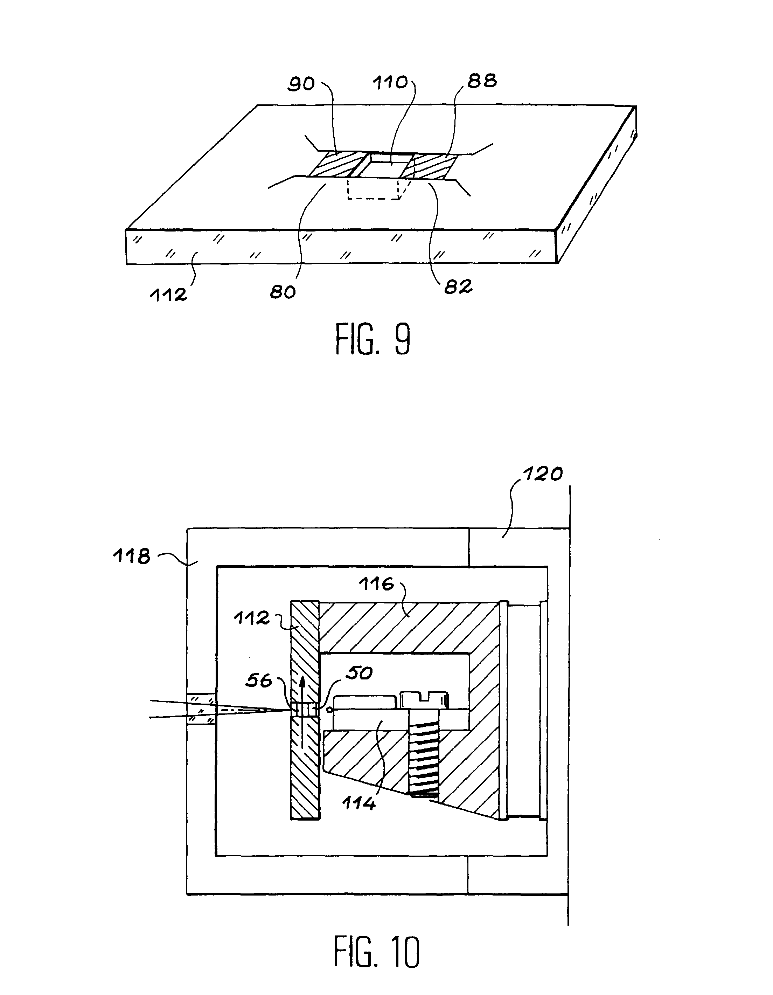

L'extension des électrodes le long de l'ensemble du microlaser permet d'améliorer l'homogénéité du champ électrique à l'intérieur de l'élément électro-optique 56. La figure 8 représente, dans le cas d'électrodes massives 92, 94 appliquées de part et d'autre d'un microlaser à deux cavités couplées, les lignes de champ. Dans la partie correspondant au milieu électro-optique 56, les lignes de champ sont droites et régulièrement espacées : le champ est donc homogène en amplitude et en direction, ce qui assure un meilleur fonctionnement du matériau déclencheur électro-optique.

Une meilleure homogénéité du champ dans le matériau électro-optique permet une meilleure exploitation de l'effet électro-optique. La consommation électrique est donc réduite, car des champs électriques inférieurs peuvent être suffisants pour le fonctionnement du matériau électro-optique.

En outre, les montages des figures 6A et 6B, dans lesquelles les électrodes ou les éléments de support 80, 82 s'étendent également de part et d'autre du milieu actif 50, présentent l'avantage suivant. Une certaine pression p peut être appliquée de part et d'autre du milieu actif laser 50. Ainsi, on peut contrôler la polarisation du faisceau émis. En effet, la contrainte induit dans le matériau laser une variation d'indice, non homogène si elle est unidirectionnelle.

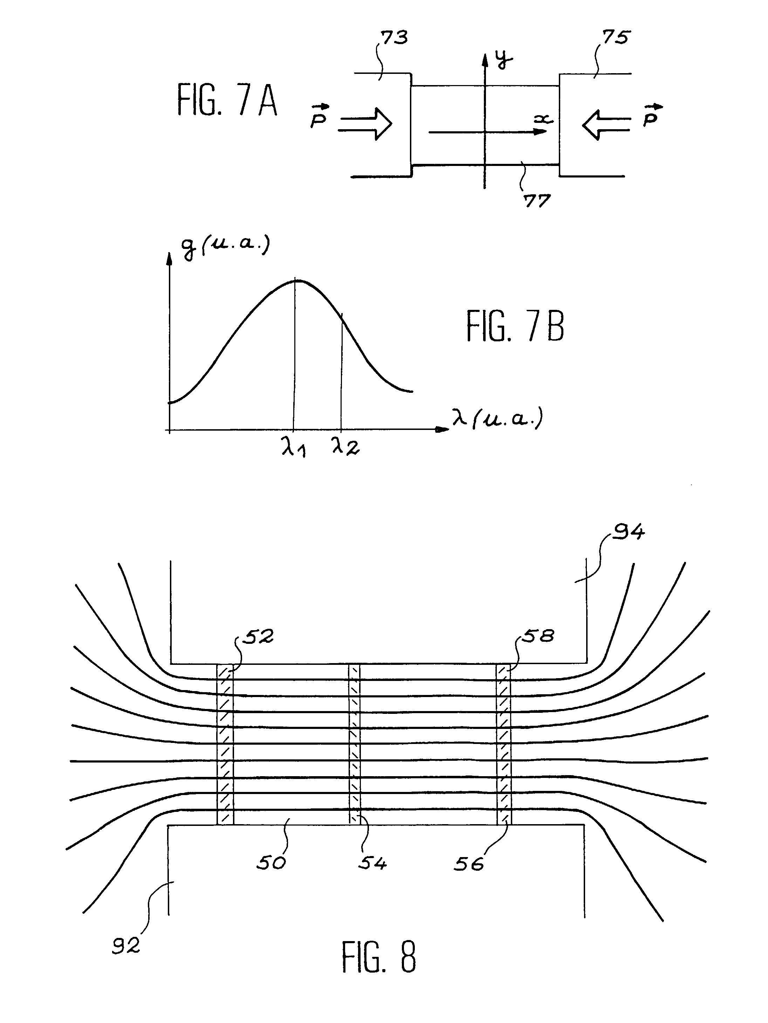

L'effet mis en oeuvre va être expliqué en liaison avec les figures 7A et 7B.

Sur la figure 7A, deux éléments 73, 75 appliquent une contrainte, ou force, P (respectivement -P) à un matériau optique 77. Ces contraintes produisent des variations de l'indice de ce matériau par effet photoélastique. Le tenseur du coefficient photoélastique relie les variations des coefficients de l'ellipsoïde des indices aux contraintes appliquées. En appliquant une pression P selon x, on crée des contraintes différentes selon x et y. L'indice optique varie donc différemment selon x et y, et un faisceau polarisé selon x ne verra pas le même indice qu'un faisceau polarisé selon y. Il en résulte deux modes de polarisation distincts qui n'ont pas la même longueur d'onde. Le premier mode a une longueur λ₁ (figure 7B), et un second mode a une longueur d'onde λ₂. Le mode λ₁ a plus de gain, et il est favorisé par rapport au mode λ₂. Donc, l'une des directions de polarisation est favorisée par rapport à l'autre.

On remarquera que certains matériaux présentent une biréfringence (|n_{y}-nₓ|, où nₓ et n_{y} représentent respectivement l'indice optique selon x et y) qui est naturelle. C'est le cas des matériaux YLF, LMA, déjà mentionnés ci-dessus ; ces matériaux sont dits non isotropes. Des matériaux comme le YAG et le verre, également mentionnés ci-dessus, sont isotropes.

Cette biréfringence induite permet de favoriser une polarisation du faisceau laser. En l'absence de contrôle, la polarisation s'établit de manière aléatoire. Pour le cas d'un matériau électro-optique biréfringent (c'est le cas du matériau LiTaO₃) les coefficients électro-optiques peuvent dépendre de la polarisation du faisceau laser. Dans ce cas, les tensions de commande vont varier selon l'état de polarisation, qui est aléatoire dans le temps et au sein même du microlaser. Si le microlaser est contraint au montage, l'état de polarisation est fixé de façon stable.

Une contrainte peut être appliquée sur le milieu actif laser même si les électrodes ou les éléments de support ne recouvrent pas entièrement les surfaces latérales 51, 53 du milieu laser 50. De plus, le milieu actif laser a été représenté sur toutes les figures avec une largeur e₂ égale ou sensiblement égale à la largeur e₁ de l'élément de déclenchement. Cependant, on peut aussi appliquer une contrainte sur le milieu actif laser dans le cas où e₁≠e₂, par exemple e₂<e₁. Il suffit, dans ce cas, d'avoir des éléments de support ou des électrodes massives de forme adaptée à celle du microlaser. Les structures des figures 6A et 6B présentent l'avantage d'une bonne homogénéité du champ électrique dans le matériau électro-optique ainsi que l'avantage de pouvoir appliquer une contrainte sur toute la surface des parois latérales du milieu actif laser.

Comme illustré sur la figure 9, les éléments de support peuvent être des parois opposées d'un trou 110 pratiqué dans un substrat 112. Les dimensions de ce trou sont adaptées aux dimensions transversales du microlaser (c'est-à-dire aux dimensions mesurées dans un plan perpendiculaire à l'axe du faisceau de pompage et du faisceau laser émis par le microlaser). Il suffit alors d'introduire l'ensemble des deux cavités couplées du microlaser dans le trou pour que cet ensemble y soit maintenu. En outre, des parois opposées du trou sont recouvertes par des métallisations assurant la fonction d'électrodes de contact de part et d'autre du matériau électrooptique. Ces métallisations peuvent être prolongées par des métallisations 88, 90 en surface du substrat 112.

Selon un exemple, illustré sur la figure 10, le substrat est une plaquette 112 de céramique (AlN par exemple). Un circuit imprimé peut être réalisé sur cette plaquette, et des composants électroniques peuvent être intégrés sur ce circuit imprimé. Ainsi, le microlaser 50, 56 est monté sur une plaquette de circuit imprimé comme un autre composant électronique. Ensuite, le tout est monté dans un boîtier 118 avec une partie de l'électronique de commande (par exemple le convertisseur haute tension). Ce boîtier microlaser peut comprendre la diode laser de pompage 114 montée sur un support 116 et, monté sur la base 120 du boîtier, un élément thermoélectrique 122 de refroidissement, du type à effet Peltier. Il reste alors à connecter l'ensemble à une alimentation basse tension.

Quel que soit le mode de réalisation envisagé, il est préférable de réaliser un bon contact entre le matériau électro-optique et les électrodes, que celles-ci se présentent sous la forme d'une métallisation sur substrat ou sous la forme d'électrodes massives. En effet, plus la distance entre le matériau électro-optique et les électrodes est grande, et plus le champ dans le matériau électro-optique est faible. Pour un meilleur ajustement, on comble l'espace entre les électrodes et le matériau électro-optique avec un matériau conducteur, par exemple souple ou fondu (par exemple de l'indium fondu vers 150°C). Un tel matériau joue donc le rôle de joint conducteur entre d'une part les électrodes et d'autre part le matériau électro-optique. La trace d'un tel joint est représentée sur la figue 5A par les références 115, 117. En fait, pratiquement, un tel joint n'est nécessaire que dans une seule direction, selon les faces où l'on veut appliquer le champ.

Les dispositifs décrits ci-dessus peuvent être couplés à une diode de pompage, directement ou par l'intermédiaire d'une fibre optique. Un faisceau de pompage est schématisé sur les figures 5A-6B par une flèche 114, et le faisceau laser émis est représenté par la flèche 116.

Un procédé de réalisation d'un dispositif selon l'invention va maintenant être décrit. La fabrication des microlasers selon l'invention peut se faire selon les étapes suivantes, toutes compatibles avec une fabrication collective. Ces étapes définissent un procédé qui est, dans l'ensemble, plus simple que les procédés collectifs connus de l'art antérieur, et moins long.
1) Dans une première étape, des plaques de matériau laser et électro-optique sont découpées en tranches.
2) On procède ensuite au polissage des deux faces des tranches, de manière à obtenir des faces planes et parallèles entre elles.
3) Eventuellement, des microsurfaces sphériques peuvent être gravées sur les surfaces polies. Une telle étape de réalisation de micromiroirs concaves est décrite dans le document EP-724 316. Elle met en oeuvre des techniques de photolithographie et usinage.
4) Il est ensuite procédé au dépôt des miroirs d'entrée, des miroirs intermédiaires, et des miroirs de sortie sur les tranches de matériau.
5) On réalise ensuite le collage d'une lame de matériau laser et d'une lame de matériau électro-optique.

Les étapes 1 à 5 décrites ci-dessus sont décrites plus précisément dans le document EP-724 316.

Les étapes suivantes se distinguent des étapes décrites dans ce dernier document.
6) On procède ensuite à la découpe des puces microlasers, de taille sensiblement égale à 1 mm². Cette découpe a lieu alors que le microlaser n'est toujours pas en contact avec les électrodes de déclenchement.
7) Par ailleurs, des éléments de support, ayant une forme adaptée au microlaser, sont métallisés ; ou bien, on réalise des électrodes massives, également de taille et de forme compatibles avec le microlaser. Dans le cas d'éléments de support à métalliser, ces éléments peuvent être, comme on l'a déjà décrit, des parois opposées d'un trou pratiqué dans un substrat, par exemple une plaquette de circuit intégré.
8) Le microlaser est monté entre les électrodes réalisées sur les éléments de support, ou bien entre les électrodes massives. Dans le cas où les électrodes sont réalisées sur les parois d'un trou pratiqué dans un substrat, le microlaser est tout simplement introduit dans ce trou.
9) La diode de pompage est ensuite connectée au microlaser.

Par conséquent, l'ensemble du procédé pour réaliser la structure selon l'invention est plus simple que les procédés de l'art antérieur. En particulier, les problèmes de connexion, avec un circuit de commande, d'électrodes déjà déposées de part et d'autre du milieu électro-optique, ne se posent plus. En outre, les étapes de dépôt du résine, et d'élimination de cette résine après réalisation des électrodes, de part et d'autre du milieu électro-optique, sont désormais inutiles. Enfin, l'étape de rainurage est supprimée.

Ce procédé permet de réaliser un microlaser avec des qualités de coût comparables à celles des microlasers déclenchés passivement ou des microlasers continus. De même, les qualités de fiabilité et de robustesse des microlasers, et leur caractère monolithique, sont conservés. En fait, le procédé de fabrication est à peu près quasiment identique à celui du microlaser à déclenchement passif, tel que décrit dans le document EP-653 824 : le procédé selon la présente invention comporte par exemple une étape d'épitaxie en phase liquide en moins, et une étape de collage en plus. Ceci permet d'envisager la compatibilité de certaines machines pour réaliser des étapes communes aux procédés de réalisation des microlasers à déclenchement passif et à déclenchement actif.

## Revendications

1. Cavité microlaser à déclenchement actif et ses moyens de déclenchement, comportant :
- un milieu constitué d'un matériau actif laser (50), formant une première cavité résonnante entre un miroir d'entrée (52) et un miroir intermédiaire (54),
- un élément de déclenchement (56), en un matériau électro-optique, formant une seconde cavité résonnante entre le miroir intermédiaire (54) et un miroir de sortie (58), et ayant une première et une deuxième surfaces latérales (57, 59),
- l'élément de déclenchement étant compris entre un premier et un second éléments de support (60, 62, 80, 82), une première électrode de déclenchement (66, 86) étant réalisée sur le premier élément de support, et étant appliquée contre la première surface latérale (57) de l'élément de déclenchement, une deuxième électrode de déclenchement (64, 84) étant réalisée sur le deuxième élément de support (62) et étant appliquée contre la deuxième surface latérale (59) de l'élément de déclenchement.

2. Cavité microlaser à déclenchement actif et ses moyens de déclenchement, selon la revendication 1, chaque électrode de déclenchement s'étendant sur au moins toute la surface latérale de l'élément de déclenchement contre laquelle elle est appliquée.

3. Cavité microlaser à déclenchement actif et ses moyens de déclenchement, selon l'une des revendications 1 ou 2, le milieu actif laser (50) étant également compris entre les premier et deuxième éléments de support (80, 82).

4. Cavité microlaser à déclenchement actif et ses moyens de déclenchement, selon la revendication 3, les électrodes de déclenchement (84, 86) de l'élément de déclenchement étant appliquées en outre de part et d'autre du milieu actif laser.

5. Cavité microlaser à déclenchement actif et ses moyens de déclenchement, selon l'une des revendications 1 ou 2, l'élément de déclenchement ayant une épaisseur e₁, le milieu actif laser ayant une épaisseur e₂ sensiblement égale à l'épaisseur e₁ de l'élément de déclenchement, chacune des première et deuxième surfaces latérales (57, 59) de l'élément de déclenchement étant prolongée par respectivement, une première et une deuxième surfaces latérales (53, 51) du milieu actif laser, l'ensemble constitué par le milieu actif laser et l'élément de déclenchement étant compris entre les premier et deuxième éléments de support (80, 82), les première et deuxième électrodes de déclenchement (84, 86) s'étendant, respectivement, sur au moins toutes les premières (respectivement : deuxièmes) surfaces latérales (51, 53, 57, 59) de l'élément de déclenchement et du milieu actif laser.

6. Cavité microlaser à déclenchement actif et ses moyens de déclenchement, selon l'une des revendications 1 à 5, les premier et second éléments de support (80, 82) étant des parois opposées d'un trou (110), pratiqué dans un substrat (112), et apte à recevoir, au moins partiellement, l'élément de déclenchement, les première et deuxième électrodes étant réalisées sur lesdites parois.

7. Cavité microlaser à déclenchement actif et ses moyens de déclenchement, selon les revendications 2 et 6, le trou ayant une profondeur au moins égale à la longueur (ℓ₁) du matériau électro-optique.

8. Cavité microlaser à déclenchement actif et ses moyens de déclenchement, selon la revendication 6 ou 7, le substrat (112) étant une plaque de circuit imprimé.

9. Cavité microlaser à déclenchement actif et ses moyens de déclenchement, comportant :
- un milieu constitué d'un matériau actif laser (50), formant une première cavité résonnante entre un miroir d'entrée (52) et un miroir intermédiaire (54),
- un élément de déclenchement en un matériau électro-optique (56), formant une seconde cavité résonnante entre le miroir intermédiaire (54) et un miroir de sortie (58), cet élément ayant une première et une deuxième surfaces latérales (57, 59),
- l'élément de déclenchement étant compris entre une première et une seconde électrodes massives (72, 74 ; 92, 94), respectivement appliquées contre au moins une partie des première et deuxième surfaces latérales (57, 59).

10. Cavité microlaser à déclenchement actif et ses moyens de déclenchement, selon la revendication 9, chaque électrode massive s'étendant sur au moins toute la surface latérale (57, 59) de l'élément électro-optique contre laquelle elle est appliquée.

11. Cavité microlaser à déclenchement actif et ses moyens de déclenchement, selon la revendication 10, l'ensemble constitué par le milieu actif laser (50) et l'élément électro-optique (56) étant compris entre les électrodes massives (92, 94).

12. Cavité microlaser à déclenchement actif et ses moyens de déclenchement, selon la revendication 9, l'élément de déclenchement ayant une épaisseur e₁, le milieu actif laser ayant une épaisseur e₂ sensiblement égale à l'épaisseur e₁ de l'élément de déclenchement, chacune des première et deuxième surfaces latérales (57, 59) de l'élément de déclenchement étant prolongée par, respectivement, une première et deuxième surfaces latérales (51, 53) du milieu actif laser, les première et deuxième électrodes massives (92, 94) étant, respectivement, appliquées sur toutes les premières (respectivement : deuxièmes) surfaces latérales du milieu actif laser et de l'élément de déclenchement.

13. Cavité microlaser à déclenchement actif et ses moyens de déclenchement, selon l'une des revendications 1 à 12, un joint conducteur (114, 116) étant situé à l'interface entre l'élément de déclenchement et les électrodes de déclenchement.

14. Procédé de réalisation d'une cavité microlaser à déclenchement actif, et de ses moyens de déclenchement, comportant les étapes suivantes :
- réalisation d'une cavité microlaser comportant :
* un miroir actif laser (50) formant une première cavité résonnante entre un miroir d'entrée (52) et un miroir intermédiaire (54),
* un élément de déclenchement en un matériau électro-optique (56) formant une seconde cavité résonnante entre le miroir intermédiaire (54) et un miroir de sortie (58),
- réalisation d'une première et d'une deuxième électrodes de déclenchement (64, 66, 84, 86) sur un premier et second éléments de support (60, 62, 80, 82),
- mise en contact des première et deuxième électrodes de déclenchement avec des première et deuxième surfaces latérales (57, 59) de l'élément de déclenchement.

15. Procédé selon la revendication 14, les premier et deuxième éléments de support étant de plus amenés en contact avec une partie au moins des première et deuxième surfaces latérales (51, 53) du milieu actif laser.

16. Procédé selon la revendication 14, les première et deuxième électrodes de déclenchement (84, 86) étant également amenées en contact avec une partie au moins des première et deuxième surfaces latérales (51, 53) du milieu actif laser.

17. Procédé selon les revendications 15 ou 16, les éléments de support exerçant une contrainte sur le milieu actif laser.

18. Procédé selon l'une des revendications 14 à 17, les premier et deuxième éléments de supports étant des bords opposés d'un trou (110) pratiqué dans un substrat (112), l'étape de mise en contact des électrodes avec les surfaces latérales de l'élément de déclenchement étant une étape d'introduction de l'élément de déclenchement dans le trou pratiqué dans le substrat.

19. Procédé de réalisation d'une cavité microlaser à déclenchement actif, et de ses moyens de déclenchement, comportant les étapes suivantes :
- réalisation d'une cavité microlaser comportant :
* un miroir actif laser (50) formant une première cavité résonnante entre un miroir d'entrée (52) et un miroir intermédiaire (54),
* un élément de déclenchement en un matériau électro-optique (56) formant une seconde cavité résonnante entre le miroir intermédiaire (54) et un miroir de sortie (58),
- réalisation d'une première et d'une deuxième électrodes massives (72, 74, 92, 94) de déclenchement,
- mise en contact des première et deuxième électrodes de déclenchement avec des première et deuxième surfaces latérales (57, 59) de l'élément de déclenchement.

20. Procédé selon la revendication 19, les première et deuxième électrode de déclenchement étant de plus amenées en contact avec une partie au moins des première et deuxième surfaces latérales (51, 53) du milieu actif laser.

21. Procédé selon la revendication 20, les première et deuxième électrodes exerçant une contrainte sur le milieu actif laser.

## Patentansprüche

1. Aktiv gütegeschalteter Mikrolaserresonator und seine Güteschaltungseinrichtungen, umfassend:
- ein durch ein aktives Lasermaterial gebildetes Medium (50), das zwischen einem Eingangsspiegel (52) und einem Zwischenspiegel (54) einen ersten Resonator bildet,
- ein Güteschaltungselement (56) aus einem elektrooptischen Material, das zwischen dem Zwischenspiegel (54) und einem Ausgangsspiegel (58) einen zweiten Resonator bildet und eine erste und eine zweite Seitenfläche (57, 59) hat,
- ein erstes und ein zweites Trägerelement (60, 62, 80, 82) des dazwischen enthaltenen Güteschaltungselements (56), wobei eine erste Güteschaltungselektrode (66, 86) auf dem ersten Trägerelement ausgebildet und an der ersten Seitenfläche (57) des Güteschaltungselements angebracht ist, und eine zweite Güteschaltungselektrode (64, 84) auf dem zweiten Trägerelement (62) ausgebildet und an der zweiten Seitenfläche (59) des Güteschaltungselements angebracht ist.

2. Aktiv gütegeschalteter Mikrolaserresonator und seine Güteschaltungseinrichtungen nach Anspruch 1, wobei jede Güteschaltungselektrode sich wenigstens über die gesamte Seitenfläche des Güteschaltungselements erstreckt, an der sie angebracht ist.

3. Aktiv gütegeschalteter Mikrolaserresonator und seine Güteschaltungseinrichtungen nach einem der Ansprüche 1 oder 2, wobei das aktive Lasermedium (50) ebenfalls zwischen dem ersten und dem zweiten Trägerelement (80, 82) enthalten ist.

4. Aktiv gütegeschalteter Mikrolaserresonator und seine Güteschaltungseinrichtungen nach Anspruch 3, wobei die Güteschaltungselektroden (84, 86) des Güteschaltungselements außerdem beiderseits des aktiven Lasermediums angebracht sind.

5. Aktiv gütegeschalteter Mikrolaserresonator und seine Güteschaltungseinrichtungen nach einem der Ansprüche 1 oder 2, wobei das aktive Lasermedium eine Dicke e₂ im Wesentlichen gleich der Dicke e₁ des Güteschaltungselements hat, die erste und die zweite Seitenfläche (57, 59) des Güteschaltungselements durch jeweils eine erste und eine zweite Seitenfläche (53, 51) des aktiven Lasermediums verlängert wird, der durch das aktive Lasermedium und das Güteschaltungselement gebildete Aufbau zwischen dem ersten und dem zweiten Trägerelement (80, 82) enthalten ist, die erste und zweite Güteschaltungselektrode (84, 86) sich jeweils über wenigstens die gesamten ersten (bzw. zweiten) Seitenflächen (51, 53, 57, 59) des Güteschaltungselements und des aktiven Lasermediums erstrecken.

6. Aktiv gütegeschalteter Mikrolaserresonator und seine Güteschaltungseinrichtungen nach einem der Ansprüche 1 bis 5, wobei das erste und das zweite Trägerelement (80, 82) einem Loch (110) gegenüberstehende Wände sind, das in einem Substrat (112) vorgesehen ist und fähig ist, das Güteschaltungselement wenigstens partiell aufzunehmen, wobei die erste und die zweite Elektrode auf den genannten Wänden ausgebildet sind.

7. Aktiv gütegeschalteter Mikrolaserresonator und seine Güteschaltungseinrichtungen nach den Ansprüchen 2 und 6, wobei das Loch eine Tiefe mit wenigstens der Länge (*l*_{*1*}) des optoelektrischen Materials hat.

8. Aktiv gütegeschalteter Mikrolaserresonator und seine Güteschaltungseinrichtungen nach Anspruch 6 oder 7, wobei das Substrat (112) eine Platte mit gedruckter Schaltung ist.

9. Aktiv gütegeschalteter Mikrolaserresonator und seine Güteschaltungseinrichtungen, umfassend:
- ein durch ein aktives Lasermaterial gebildetes Medium (50), das zwischen einem Eingangsspiegel (52) und einem Zwischenspiegel (54) einen ersten Resonator bildet,
- ein Güteschaltungselement (56) aus einem elektrooptischen Material, das zwischen dem Zwischenspiegel (54) und einem Ausgangsspiegel (58) einen zweiten Resonator bildet, wobei dieses Element eine erste und eine zweite Seitenfläche (57, 59) hat,
- eine erste und eine zweite massive Elektrode (72, 74; 92, 94) beiderseits des Güteschaltungselements (56), jeweils angebracht auf wenigstens einem Teil der ersten und zweiten Seitenflächen (57, 59).

10. Aktiv gütegeschalteter Mikrolaserresonator und seine Güteschaltungseinrichtungen nach Anspruch 9, wobei sich jede massive Elektrode über wenigstens die gesamte Seitenfläche (57, 59) des elektrooptischen Elements erstreckt, an der sie angebracht ist.

11. Aktiv gütegeschalteter Mikrolaserresonator und seine Güteschaltungseinrichtungen nach Anspruch 10, wobei der das aktive Lasermedium (50) und das elektrooptische Element (56) bildende Aufbau zwischen den massiven Elektroden (92, 94) enthalten ist.

12. Aktiv gütegeschalteter Mikrolaserresonator und seine Güteschaltungseinrichtungen nach Anspruch 9, wobei das Güteschaltungselement eine Dicke e₁ hat, das aktive Lasermedium im Wesentlichen eine Dicke e₂ gleich der Dicke e₁ des Güteschaltungselements hat und jede der beiden Seitenflächen des Güteschaltungselements verlängert wird durch jeweils eine erste und eine zweite Seitenfläche (51, 53) des aktiven Lasermediums, wobei die erste und die zweite massive Elektrode (92, 94) jeweils an den gesamten ersten (bzw. zweiten) Seitenflächen des aktiven Lasermediums und des Güteschaltungelements angebracht sind.

13. Aktiv gütegeschalteter Mikrolaserresonator und seine Güteschaltungseinrichtungen nach einem der Ansprüche 1 bis 12, wobei ein leitfähiges Verbindungselement (114, 116) sich an der Schnittstelle zwischen dem Güteschaltungselement und den Güteschaltungselektroden befindet.

14. Verfahren zur Herstellung eines Mikrolaserresonators mit aktiver Güteschaltung und seiner Güteschaltungseinrichtungen, die folgenden Schritten umfassend:
- Herstellung eines Mikrolaserresonators mit:
* einem aktiven Laserspiegel (50), der zwischen einem Eingangsspiegel (52) und einem Zwischenspiegel (54) einen ersten Resonator bildet,
* einem Güteschaltungselement aus einem elektrooptischen Material (56), das zwischen dem Zwischenspiegel (54) und einem Ausgangsspiegel (58) einen zweiten Resonator bildet,
- Herstellung einer ersten und einer zweiten Güteschaltungselektrode (64, 66, 84, 86) auf einem ersten und einem zweiten Trägerelement (60, 62, 80, 82),
- Kontaktherstellung zwischen der ersten und zweiten Güteschaltungselektrode und der ersten und zweiten Seitenfläche (57, 59) des Güteschaltungselements.

15. Verfahren nach Anspruch 14, wobei das erste und das zweite Trägerelement außerdem mit wenigstens einem Teil der ersten und der zweiten Seitenfläche (51, 53) des aktiven Lasermediums in Kontakt gebracht wird.

16. Verfahren nach Anspruch 14, wobei die erste und zweite Güteschaltungselektrode (84, 86) ebenfalls mit wenigstens einem Teil der ersten und zweiten Seitenfläche (51, 53) des aktiven Lasermediums in Kontakt gebracht werden.

17. Verfahren nach den Ansprüchen 15 oder 16, wobei die Trägerelemente auf das aktive Lasermedium eine Spannung ausüben.

18. Verfahren nach einem der Ansprüche 14 bis 17, wobei das erste und das zweite Trägerelement entgegengesetzte Ränder eines in einem Substrat (112) hergestellten Lochs (110) sind, und der Schritt der Kontaktherstellung zwischen den Elektroden und den Seitenflächen des Güteschaltungselements ein Einbauschritt des Güteschaltungselements in das in dem Substrat hergestellte Loch ist.

19. Verfahren zum Herstellen eines Mikrolaserresonators und seiner Güteschaltungseinrichtungen, die folgenden Schritte umfassend:
- Herstellung eines Mikrolaserresonators mit:
* einem aktiven Laserspiegel (50), der zwischen einem Eingangsspiegel (52) und einem Zwischenspiegel (54) einen ersten Resonator bildet,
* einem Güteschaltungselement aus einem elektrooptischen Material (56), das zwischen dem Zwischenspiegel (54) und einem Ausgangsspiegel (58) einen zweiten Resonator bildet,
- Herstellung einer ersten und einer zweiten massiven Güteschaltungselektrode (72, 74, 92, 94),
- Kontaktherstellung zwischen der ersten und zweiten Güteschaltungselektrode und der ersten und zweiten Seitenfläche (57, 59) des Güteschaltungselements.

20. Verfahren nach Anspruch 19, wobei die erste und zweite Güteschaltungselektrode zudem mit wenigstens einem Teil der ersten und zweiten Seitenfläche (51, 53) des aktiven Lasermediums in Kontakt gebracht werden.

21. Verfahren nach Anspruch 20, wobei die erste und die zweite Elektrode auf das aktive Lasermedium eine Spannung ausüben.

## Claims

1. Actively switched microlaser cavity and its switching means comprising:
- a medium constituted by an active laser material (50) forming a first resonant cavity between an input mirror (52) and an intermediate mirror (54),
- a switching element (56) of an electrooptical material forming a second resonant cavity between the intermediate mirror and an output mirror (58) and having a first and a second lateral surfaces (57, 59),
- the switching element being placed between a first and a second support elements (60, 62, 80, 82), a first switching electrode (66, 86) being produced on the first support element and being applied to the first lateral surface (57) of the switching element, a second switching electrode (64, 84) being produced on the second support element (62) and being applied to the second lateral surface (59) of the switching element.

2. Actively switched microlaser cavity and its switching means according to claim 1, each switching electrode extending over at least the entire lateral surface of the switching element to which it is applied.

3. Actively switched microlaser cavity and its switching means according to one of the claims 1 or 2, the active laser medium (50) also being located between the first and second support elements (80, 82).

4. Actively switched microlaser cavity and its switching means according to claim 3, the switching electrodes (84, 86) of the switching element being applied on either side of the active laser medium.

5. Actively switched microlaser cavity and its switching means according to one of the claims 1 or 2, the switching element having a thickness e₁, the active laser medium having a thickness e₂ substantially equal to the switching element thickness e₁, each of the first and second lateral surfaces (57, 59) of the switching element being extended respectively by a first and a second lateral surfaces (53, 51) of the active laser medium, the assembly constituted by the active laser medium and the switching element being placed between the first and second support elements (80, 82), the first and second switcing electrodes (84, 86) respectively extending over at least all the first (respectively second) lateral surfaces (51, 53, 57, 59) of the switching element and the active laser medium.

6. Actively switched microlaser cavity and its switching means according to one of the claims 1 to 5, the first and second support elements (80, 82) being the opposite walls of a hole (110) made in a substrate (112) and able to at least partly receive the switching element, the first and second electrodes being produced on said walls.

7. Actively switched microlaser cavity and its switching means according to claims 2 and 6, the hole having a depth at least equal to the length (ℓ₁) of the electrooptical material.

8. Actively switched microlaser cavity and its switching means according to claims 6 or 7, the substrate (112) being a printed circuit board.

9. Actively switched microlaser and its switching means comprising:
- a medium constituted by an active laser material (50) forming a first resonant cavity between an input mirror (52) and an intermediate mirror (54),
- a switching element (56) of an electrooptical material forming a second resonant cavity between the intermediate mirror (54) and an output mirror (58), said element having a first and a second lateral surfaces (57, 59),
- the switching element being located between a first and a second solid electrodes (72, 74, 92, 94), respectively applied to at least one part of the first and second lateral surfaces (57, 59).

10. Actively switched microlaser cavity and its switching means according to claim 9, each solid electrode extending over at least the entire lateral surface (57, 59) of the electrooptical element to which it is applied.

11. Actively switched microlaser cavity and its switching means according to claim 10, the assembly constituted by the active laser medium (50) and the electrooptical element (56) being placed between the solid electrodes (92, 94).

12. Actively switched microlaser cavity and its switching means according to claim 9, the switching element having a thickness e₁, the active laser medium having a thickness e₂ substantially equal to the switching element thickness e₁, each of the first and second lateral surfaces (57, 59) of the switching element being respectively extended by a first and a second lateral surfaces (51, 53) of the active laser medium, the first and second solid electrodes (92, 94) being respectively applied to all the first (respectively second) lateral surfaces of the active laser medium and the switching element.

13. Actively switched microlaser cavity and its switching means according to one of the claims 1 to 12, a conductive joint (114, 116) being located at the interface between the switching element and the switching electrodes.

14. Process for producing an actively switched microlaser cavity and its switching means involving the following stages:
producing a microlaser cavity having:
- an active laser mirror (50) forming a first resonant cavity between an input mirror (52) and an intermediate mirror (54),
- a switching element of an electrooptical material (56) forming a second resonant cavity between the intermediate mirror (54) and an output mirror (58), producing a first and a second switching electrodes (64, 66, 84, 86) of a first and a second support elements (60, 62, 80, 82),
- contacting the first and second switching electrodes with first and second lateral surfaces (57, 59) of the switching element.

15. Process according to claim 14, the first and second support elements also being brought into contact with at least part of the first and second lateral surfaces (51, 53) of the active laser medium.

16. Process according to claim 14, the first and second switching electrodes (84, 86) also being contacted with at least part of the first and second lateral surfaces (51, 53) of the active laser medium.

17. Process according to claims 15 or 16, the support elements exerting a stress on the active laser medium.

18. Process according to any one of the claims 14 to 17, the first and second support elements being opposite edges of a hole (110) made in a substrate (112), the stage of contacting the electrodes with the lateral surfaces of the switching element being a stage of introducing the switching element into the hole made in the substrate.

19. Process for the production of an actively switched microlaser cavity and its switching means, involving the following stages:
producing a microlaser cavity with:
- an active laser mirror (50) forming a first resonant cavity between an input mirror (52) and an intermediate mirror (54),
- a switching element (56) of an electrooptical material forming a second resonant cavity between the intermediate mirror (54) and an output mirror (58), producing a first and a second solid switching electrodes (72, 74, 92, 94),
contacting the first and second switching electrodes with first and second lateral surfaces (57, 59) of the switching element.

20. Process according to claim 19, the first and second switching electrodes also being brought into contact with at least part of the first and second lateral surfaces (51, 53) of the active laser medium.

21. Process according to claim 20, the first and second electrodes exerting a stress on the active laser medium.
